# EUROPÄISCHE PATENTSCHRIFT

(11) **EP 0 842 035 B1**
(45) Veröffentlichungstag und Bekanntmachung des Hinweises auf die Patenterteilung: **10.05.2000**
(21) Anmeldenummer: 97921779.1
(22) Anmeldetag: 25.04.1997
(51) Int. Cl.: B29C 47/88

(54) **VORRICHTUNG ZUM ANLEGEN EINES KUNSTSTOFFILMS AN EINER WALZE**
DEVICE FOR LAYING A PLASTIC FILM ON A ROLLER
DISPOSITIF POUR PLACER UN FILM PLASTIQUE SUR UN ROULEAU

(30) Priorität: 09.05.1996 DE 19618716
(43) Veröffentlichungstag der Anmeldung: 20.05.1998
(73) Patentinhaber: Brückner Maschinenbau GmbH, 83313 Siegsdorf (DE)
(72) Erfinder: STEFFL, Manfred, D-83224 Grassau (DE)
(74) Vertreter: Flach, Dieter Dipl.-Phys.
(86) Internationale Anmeldenummer: EP9702148
(87) Internationale Veröffentlichungsnummer: WO9743107

(56) Entgegenhaltungen:
- EP-A- 0 595 737
- US-A- 3 597 515
- US-A- 4 255 365
- PATENT ABSTRACTS OF JAPAN vol. 095, no. 002, 31.März 1995 & JP 06 328464 A (MITSUBISHI HEAVY IND LTD), 29.November 1994,

## Beschreibung

Die Erfindung betrifft eine Vorrichtung zum Anlegen eines Kunststoffilms an einer Walze, insbesondere zum Anlegen eines Kunststoff-Schmelzfilmes an einer Kühlwalze, nach dem Oberbegriff des Anspruches 1.

Bei der Herstellung von Kunststoffolien ist es grundsätzlich üblich, den aus einer Breitschlitzdüse austretenden Schmelzfilm mittels eines sogenannten Luftmessers unter Erzeugung einer ausreichenden Luftgeschwindigkeit (Staudruck) an eine Kühlwalze anzupressen. Das Luftmesser erstreckt sich dabei in seiner Längsrichtung quer über die Breite des Schmelzfilmes, also quer zur Abzugsrichtung der Kunststoffolie, wobei über einen durchgehenden Austrittsschlitz unter Erzeugung einer entsprechenden Luftgeschwindigkeit Luft in Richtung des Schmelzfilmes austreten kann.

Da der Schmelzfilm einen dickeren Rand aufweist, muß dieser mit größerer Kraft an die Kühlwalze angedrückt werden. Dadurch soll auch das Ziel verfolgt werden, einen Breiteneinsprung der Folie zu minimieren, d.h. zu gewährleisten, daß die Schmelzfilmbreite während der Kunststoffolienproduktion möglichst gleich bleibt.

Eine gattungsbildende Vorrichtung ist aus der US-A-4 225 365 bekannt geworden. Das aus dieser Vorrichtung bekannte Luftmesser weist eine Vielzahl von in Längsrichtung des Luftmessers versetzt angeordneten und auf die Folienbahn gerichteten Luftaustrittsöffnungen auf. Diese eröffnen die Möglichkeit, über die Länge des Luftmessers, d.h. über die Breite der Kunststoffolienbahn, unterschiedliche Andruckkräfte zu erzeugen, um letztlich das Dickenprofil der Folie zu beeinflussen.

Aber auch bei dieser vorbekannten Vorrichtung ist es erforderlich, an den beiden Folienrändern zusätzliche Einrichtungen einzusetzen, um hier gezielt die benötigten höheren Anpreß-Druckkräfte in Anpassung an die jeweilige Folienbreite zu erzeugen. Schließlich ist eine derartige Konstruktion auch nur für eine bestimmte Breite einer Kunststoffolienbahn geeignet.

Ein in seiner wirksamen Länge unterschiedliches Luftmesser ist beispielsweise auch aus der JP-A-06-328464 bekannt geworden. Dort ist jeweils gegenüberliegend an den Stirnseiten eine Dichtungseinrichtung vorgesehen, die mittels einer Gewindeschraube in Längsrichtung des Austrittsspaltes des Luftmesser verstellbar ist. Durch Verdrehen der Gewindebolzen können die beiden Dichteinrichtungen aufeinander zu oder voneinander weg bewegt werden, wodurch der wirksame Luftaustrittsspalt des Luftmessers verkleinert oder vergrößert wird.

Ein einstellbares Luftmesser ist schließlich auch aus der EP-A-0 595 737 bekannt geworden. Auch dort sind an den gegenüberliegenden Stirnseiten Luftumlenkeinrichtungen aufeinander zu oder voneinander weg mittels einer Spindel verstellbar, die ein Tragflügelprofil aufweisen, wodurch die wirksame Länge des Luftmessers verändert werden kann.

Aber auch die zuletzt genannten Einrichtungen haben sich in der Praxis nicht bewährt, weshalb in der Regel, wie beim eingangs genannten gattungsbildenden Stand der Technik auch, es erforderlich ist, an den Folienrändern noch weiteren sog. "Edge Pipes" einzusetzen, um den Folienrand besonders sicher und stark an die Abkühlwalze anzupressen.

Aufgabe der vorliegenden Erfindung ist es von daher, die Nachteile nach dem Stand der Technik zu überwinden und eine dem gegenüber verbesserte Vorrichtung zum Anlegen eines Kunststoffilmes an einer Walze, insbesondere zum Anlegen eines Kunststoff-Schmelzfilms an einer Kühlwalze, zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Erfindungsgemäß hat sich gezeigt, daß speziell bei höheren Abzugsgeschwindigkeiten ein in Abzugsrichtung vorhandener Versatz der Wirklinien der Austrittsöffnungen des Luftmessers und der separat vorgesehenen Randanblasung nachteilig ist. Ein derartiger Versatz der Wirklinien der Randanblasung sowie der Luftmesseranblasung weist mehrere Nachteile auf. Er führt nicht nur zu einem Verzug der Folie, sondern verursacht häufig auch Markierungen auf der Folie, insbesondere im Randbereich. Durch den Versatz der Wirklinien im Stand der Technik ist auch ein Einblasen der Anpreßluft im Randbereich zwischen der Walze und der Folie festzustellen, wodurch unruhig verlaufende Folienränder erzeugt werden und eventuell auch das unerwünschte Aufdrehen der Ränder begünstigt wird. Schließlich ist auch eine gegenseitige negative Beeinflussung bei der Verstellung des Luftmessers und/oder der Randanblasung festzustellen.

Demgegenüber wird erfindungsgemäß eine gemeinsame gerade Wirk- und Anlegelinie über die gesamte Breite der Folienbahn einschließlich der Randanblasung ermöglicht. Durch diese optimale gemeinsame Anlege-Wirklinie wird die im Stand der Technik vorhandene Gefahr des Auftretens von Quermarkierungen auf der Folie reduziert und die Gefahr des Einblasens von Abluft im Randbereich zwischen Walze und Folie verringert. Dadurch lassen sich auch möglichst gleichbleibende flache Folienränder erzielen.

Alternativ oder ergänzend ist ferner vorgesehen, daß das Luftmesser in seiner Längsrichtung, also mit seiner sich quer zur Kunststoff-Folienbahn erstreckenden Wirkbreite, d.h. insbesondere im Hinblick auf seine wirksamen Luftaustrittsöffnungen, verstellbar ist. Dadurch läßt sich einfach in optimaler Weise die Anlegebreite genau auf die Filmbreite anpassen, um insbesondere auch hierdurch ein seitliches Einblasen von Luft zwischen Walze und Folie zu vermeiden, wodurch die oben erwähnten Nachteile eliminiert werden. Dabei bleibt die Schlitzbreite der Luftaustrittsöffnung im Luftmesser unverändert.

Als besonders vorteilhaft erweist sich die quer zur Abzugsrichtung erfolgende Breitenverstellung des Luftmessers zur Anpassung an die Kunststoffolienbreite bei Vorhandensein der in dem Luftmesser integrierten Einrichtung zur seitlichen Randanblasung, da dadurch eine gemeinsame gleichzeitige Breitenverstellung des Ausblasschlitzes und damit eine Lageanpassung der Randanblasung realisierbar ist. Insbesondere dadurch ist es möglich sicherzustellen, daß ein seitliches Einblasen der Luft zwischen Walze und Folie sicher vermieden wird.

In einer Weiterbildung der Erfindung ist dabei vorgesehen, daß die Einrichtung zur Randanblasung entweder völlig getrennt zur Luftmesseranblasung erfolgt, einstellbar und damit ansteuerbar ist, oder aber daß ein fließender Übergang zwischen den Luftströmen vorgesehen ist, die im Bereich, d.h. im mittleren Bereich des Luftmessers zum einen und in den Randbereichen zur Randanblasung zum anderen auf die Folie gerichtet werden.

Die Erfindung wird nachfolgend anhand von Zeichnungen für verschiedene Ausführungsbeispiele erläutert. Dabei zeigen in einzelnen:
- Figur 1 :: eine schematische Seitenansicht der erfindungsgemäßen Vorrichtung;
- Figur 2 :: eine schematische Querschnittsdarstellung durch das erfindungsgemäße Luftmesser;
- Figur 3 :: eine perspektivische Darstellung des einen verstellbaren Luftmesser-Elementes;
- Figur 4 :: eine schematische ausschnittsweise Vertikalschnittdarstellung in Längsrichtung des Luftmessers im Bereich seiner Kammer zur Randanblasung;
- Figur 5 :: eine Querschnittsdarstellung längs der Linie V-V in Fig. 4;
- Figur 6 :: eine Abwandlung zu Figur 4; und
- Figur 7 :: ein zu Figur 3 abgewandeltes weiteres Ausführungsbeispiel.

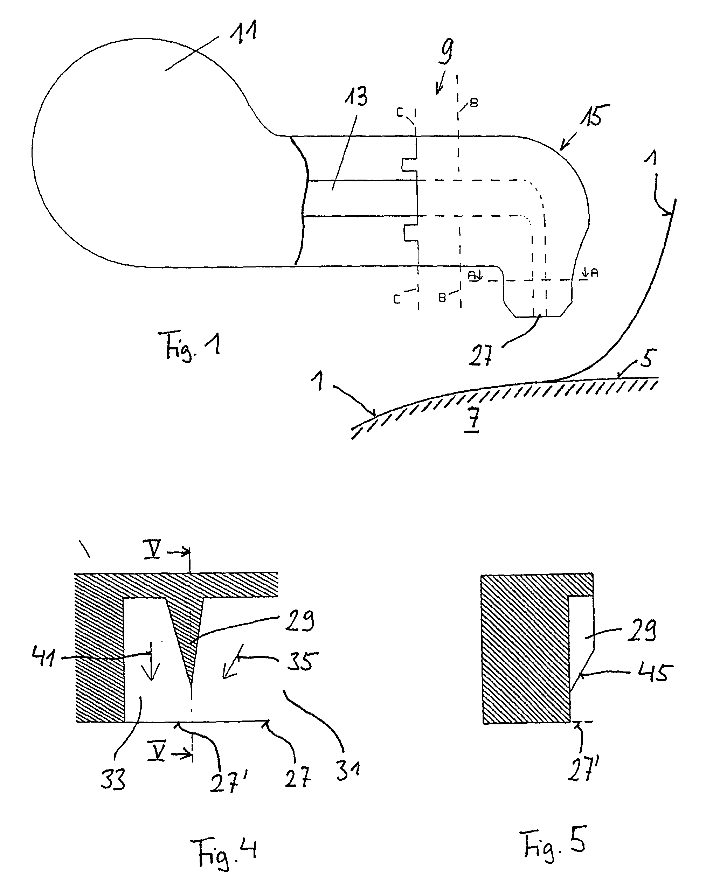

In Fig. 1 ist in schematischer Seitenansicht ein Kunststoffilm 1, insbesondere ein Kunststoff-Schmelzfilm 1, dargestellt, wie er der Pfeilrichtung 3 folgend von einer Breitschlitzdüse auf eine in axialer Stirnseitenansicht ausschnittsweise gezeigte Oberfläche 5 einer Walze 7 angelegt wird, die nachfolgend auch als Kühlwalze bezeichnet wird.

Zur Erzeugung der notwendigen Anpreßkräfte zum Anlegen des Kunststoff-Schmelzfilmes 1 auf die Kühlwalze 7 ist eine sich über die Breite des Kunststoff-Schmelzfilms 1, also quer zur Abzugsrichtung der Kunststoffolie, erstreckende Vorrichtung 9 zum Anlegen des Kunststoff-Schmelzfilms an der Kühlwalze dargestellt.

Diese Vorrichtung umfaßt in ihrem in Fig. 1 dargestellten linken Teil eine Luftverteilungs-Kammer 11, die der gleichmäßigen Luftverteilung dient.
Daran schließt sich über einen oder mehrere Verbindungskanäle 13 ein sogenanntes Luftmesser 15 an, welches anhand der nachfolgenden schematischen Zeichnung näher erläutert wird. Das Luftmesser erstreckt sich dabei in seiner Längsrichtung quer zur Kunststoffolie 1, also quer zur Abzugsrichtung der Kunststoffolie 1. Insoweit wird nachfolgend auch von der Wirkbreite des Luftmessers 15 gesprochen, d.h. der Wirkbreite bezogen auf die Breite der Kunststofffolie.

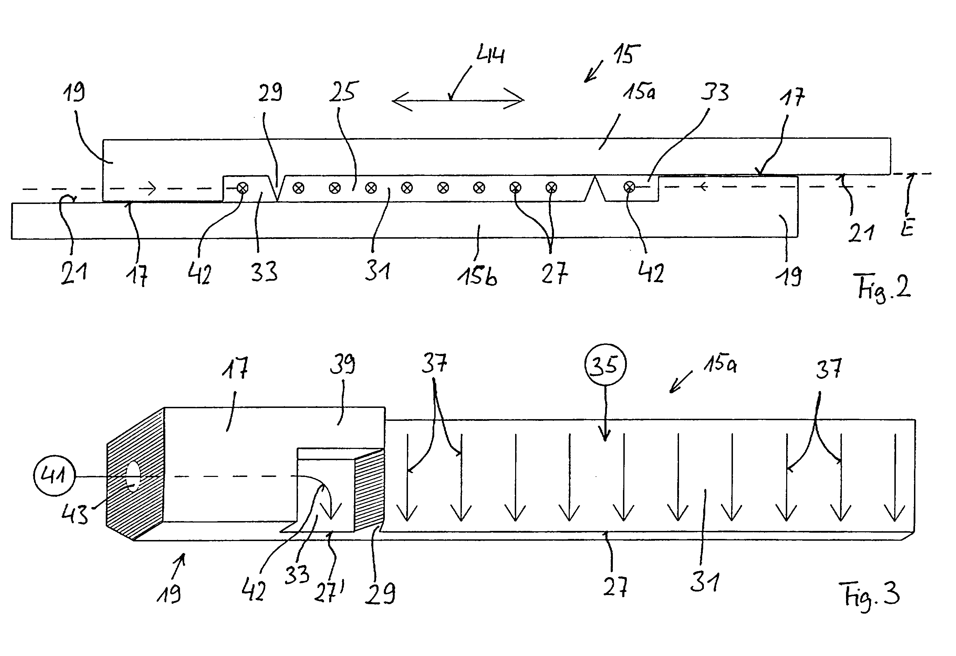

Das Luftmesser 15 besteht gemäß der schematischen Querschnittsdarstellung nach Fig. 2 aus im wesentlichen zwei Luftmesser-Elementen 15a und 15b. Diese Luftmesser-Elemente 15a und 15b sind zumindest im Querschnitt identisch gebildet und weisen im wesentlichen eine in der Querschnittsdarstellung gemäß Fig. 2 L-förmige Gestaltung auf. Beide Luftmesser-Elemente 15a und 15b sind dabei um 180° gedreht zueinander angeordnet, so daß jeweils die Stirnwand 17 des vergleichsweise schmal gestalteten kurzen Schenkels 19 des Einluftmessers 15 an der quer zur Kunststoff-Folienbahn 1 verlaufenden Anlagewand 21 des langen Schenkels 23 des jeweils anderen Luftmessers 15 anliegt. Dadurch wird eine in Umfangsrichtung geschlossene Kammer 25 gebildet, durch welche die Luft senkrecht zur Zeichenebene hindurchströmen kann.

Dadurch ergibt sich eine untere schlitzförmige Luftaustrittsöffnung 27.

Jeweils zur Begrenzungswand des kürzeren Schenkels 19 nach innen versetzt liegend sind in der Querschnittsdarstellung keilförmige Stege 29 jeweils an dem Luftmesser-Element 15a bzw. 15b ausgebildet, an dem auch der betreffende kurze Schenkel 19 ausgebildet ist.

Durch diese Anordnung ergibt sich eine im wesentlichen zumindest fast über die gesamte Breite der Kunststoff-Folienbahn 1 einstellbare Mittelkammer 31 und dazu durch die Stege 29 getrennt jeweils außenliegende Außenkammern 33 für die Randanblasung.

Wie sich aus der schematischen perspektivischen Darstellung gemäß Fig. 3 ergibt, kann von der Luftverteilungs-Kammer 11 (Fig. 1) kommend, nachfolgend auch als Ventilatorluft 35 bezeichnete Druckluft, von der rückwärtigen Seite des Luftmessers 15 der Mittelkammer 31 zugeführt werden, wobei diese Ventilatorluft 35 der Pfeildarstellung 37 in Fig. 3 folgend über die Mittelkammer 31 praktisch über die gesamte Breite des Kunststoff-Schmelzfilms 1 über die untere Luftaustrittsöffnung 27 in Richtung Folie abströmt.

Aus Fig. 3 ist auch ersichtlich, daß die Außenkammern 33 gegebenenfalls nicht mehr über den erwähnten Steg 29, sondern auch über eine rückwärtige Wand 39 von der Mittelkammer 31 getrennt oder abgesetzt sind, so daß über einen separaten Zuführkanal 43 Hochdruck- oder Preßluft 41 mit höherem Druck als die Ventilatorluft 35 getrennt zur Ventilatorluft über den jeweiligen seitlichen Zuführkanal 43 und die jeweilige Außenkammer 33 über die seitlichen Luftaustrittsöffnungen 27' gemäß Pfeildarstellung 42 nach unten hin abgegeben werden kann.

Da die beiden Luftmesser-Elemente 15a, 15b, die nachfolgend teilweise auch als Luftmesser-Lippen bezeichnet werden, gemäß der Pfeildarstellung 44 in Fig. 2 relativ zueinander in Längsrichtung (also quer zur Kunststoff-Schmelzfilmbahn 1) verschoben werden können, kann dadurch die wirksame Länge der Mittelkammer 31 verändert werden. Trotz dieser verschiebbaren Anordnung der Luftmesser-Lippen 15a, 15b wird die Breite für die Randanblasung konstant gehalten, da die Länge der Außenkammer 33 unverändert bleibt. Durch diese Anordnung kann einfach eine optimale Anpassung an die wirksame Breite der Kunststoff-Schmelzfilmbreite vorgenommen werden, wobei stets eine gemeinsame gerade Anpreß- und Wirklinie zur Anpressung des Schmelzfilms 1 an der Kühlwalze 7 erzeugt wird. Dabei kann der Druck zur Erzeugung höherer Anpreßkräfte am Rand des Schmelzfilms durch die separate Zuführung von Preßluft in entsprechend gewünschter und von dem Druck der Ventilatorluft abweichender Höhe eingestellt werden.

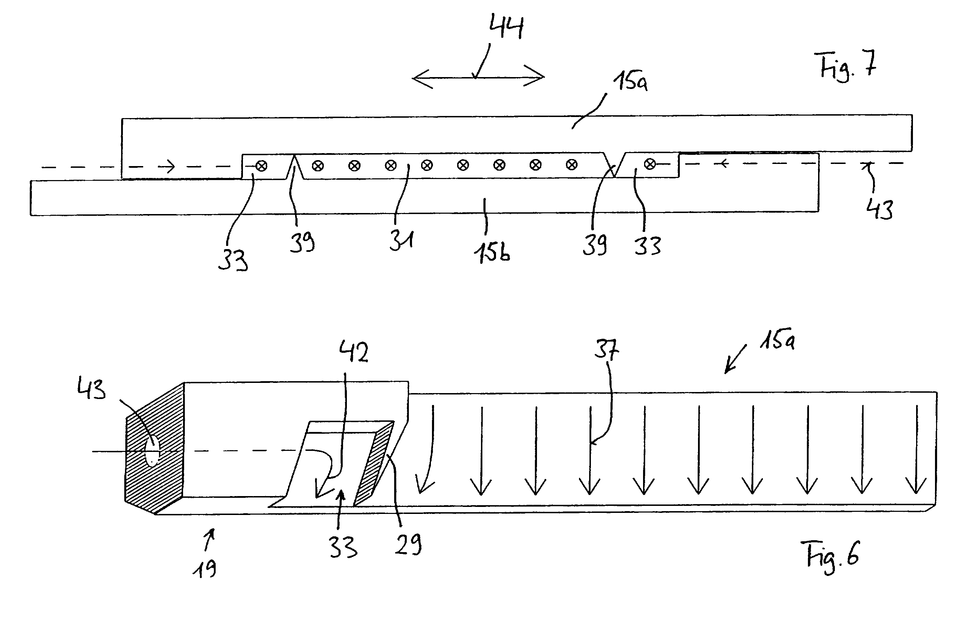

Aus der Darstellung gemäß Fig. 3 und 4 ist auch ersichtlich, daß die Stege 29 auch so angeordnet und geformt sein können, daß keine vollständige Trennung zwischen der Mittelkammer 31 und den Außenkammern 33 bewirkt wird. Durch die Ausführungsvariante gemäß Fig. 3 und 4 wird bewirkt, daß sich die über die Außenkammern 33 zugeführte Preßluft 41 und die über die Mittelkammer 31 zugeführte Ventilatorluft 35 noch vor Erreichen des untenliegenden Luftaustrittsspaltes 27 bzw. 27' in die Umgebung mischen, um einen fließenden Übergang der Andruckkräfte zu erreichen.

Dazu sind die Stege 29 gemäß Fig. 3 und 4 nicht nur in einer Querschnittsebene parallel zur Kunststoff-Folienbahn (also parallel zu dem unteren Luftaustrittsspalt 27) keilförmig verlaufend gestaltet, sondern enden alternativ ergänzend bereits oberhalb der Ebene der Luftaustrittsöffnung 27. Gemäß der Schnittdarstellung in Fig. 5 ist dabei die vordere Kante 45 des Steges 29 abgeschrägt, so daß entsprechend der gewählten Geometrie eine zunehmende Vermischung zwischen Preß- und Ventilatorluft stattfindet, umso näher beide Ströme der Luftaustrittsöffnung 27, 27' kommen.

Um möglicherweise unterschiedliche Ausströmgeometrien zu verwirklichen, insbesondere auch im Hinblick auf eine einfache Anpassung an unterschiedliche verwendete Rohstoffe, Foliendicken, Anlagengeschwindigkeiten und/oder andere Parameter etc. kann ferner vorgesehen sein, daß in den Außenkammern 33 oder in der durch die Luftmesser-Elemente 15a, 15b insgesamt gebildeten Kammer außenliegend unterschiedliche Einsätze, nachfolgend auch Preßluftkammer-Einsätze 33' einsetzbar sind. Die Stege 29 werden somit Teil eines auswechselbaren Einsatzes, um hier eine einfache Anpassung an unterschiedliche gewünschte Geometrien vornehmen zu können.

Die Trennungs- oder Verschiebeebene E zwischen den beiden anhand der in Fig. 2 und 3 schematisch dargestellten Luftmesser-Elementen 15a und 15b kann beispielsweise längs der strichlierten Linie A-A oder beispielsweise auch B-B bzw. C-C in Fig. 1 oder anderer geeigneter Stelle ausgebildet sein.

Anhand von Figur 6 ist in Abweichung zu Figur 4 nur angedeutet, daß die Geometrie der Außen- oder Hochdruckkammer 33 und/oder der Stegwand 29 in Anpassung an unterschiedliche Kunststoffolien, Parameter etc. zur Optimierung auch unterschiedlich gewählt werden kann. Bei dem Ausführungsbeispiel gemäß Figur 6 sind die Seitenwände in Strömrichtung mit nach außen gerichteter Komponente gestaltet. Dadurch kann ermöglicht werden, daß die austretende Hochdruckluft nicht nur mit einer Strömungskomponente senkrecht zur Ebene des Kunststoffilms, sondern auch mit von der Kunststoff-Folienmittellängslinie wegweisender, auswärtsgerichteter Komponente aus dem Luftspalt 27' austreten kann. Der Neigungswinkel zur Folienbahn kann beispielsweise 0° bis 45°, insbesondere 15° bis 20°, betragen. Hier erweisen sich die erwähnten auswechselbaren Einsätze als besonders günstig, da so problemlos Einsätze mit unterschiedlichen Geometrien jederzeit eingesetzt werden können.

Schließlich ist anhand von Figur 7 nur verdeutlicht, daß in Abweichung zu Figur 2 die Stege 29 nicht an dem jeweils mit dem kurzen Schenkel 19 versehenen Luftmesser-Element 15a bzw. 15b angeordnet und damit mitbewegbar sind, sondern an dem jeweils gegenüberliegenden Luftmesser-Element 15a bzw. 15b. Eine Verstellung in Längsrichtung des Luftmessers und damit in Breitenwirkung bezogen auf die Kunststoffolienbahn ergibt sich dadurch, daß nicht nur die wirksame Länge in Wirkbreite der mittleren Ventilatorluft-Kammer 25, sondern auch die Länge in Wirkbreite der Außenkammern 33 unterschiedlich einstellbar ist.

## Patentansprüche

1. Vorrichtung zum Anlegen eines Kunststoffilms an einer Walze (7), insbesondere zum Anlegen eines Kunststoff-Schmelzfilms an einer Kühlwalze (7), mit einem Luftmesser (15), welches sich mit seiner Längsrichtung quer über die Folienbahn (1) und damit in Wirkbreite der in Abzugsrichtung abgezogenen Folienbahn (1) erstreckt, und welches mit einer oder mehreren Luftaustrittsöffnungen (27) zur Druckbeaufschlagung des Kunststoffilms (1) mittels Luft versehen ist, welche mit quer zur Folienbahn gerichteter Strömungskomponente austritt, und mit einer separat betreibbaren Einrichtung zur Randanblasung des Kunststoffilms mit erhöhtem Luftdruck und/oder erhöhter Luftgeschwindigkeit, wobei die Einrichtung zur Randanblasung in das Luftmesser (15) integriert ist, **gekennzeichnet durch** die folgenden Merkmale
- das Luftmesser (15) mit seiner Einrichtung zur Randanblasung ist in Längsrichtung des Luftmessers und damit quer zur Abzugsrichtung der Folienbahn (1) in unterschiedlicher Wirkbreite einstellbar,
- das Luftmesser (15) umfaßt zumindest drei Kammern, nämlich zumindest eine Mittelkammer (31) zur Mittenanblasung der Kunststoffolie und zumindest zwei gegenüberliegende Außenkammern (33) zur Randanblasung der Kunststoffolie,
- die zumindest beiden von der zumindest einen Mittelkammer (31) getrennten Außenkammern (33) sind in Längsrichtung des Luftmessers unter gleichzeitiger Längenveränderung der zumindest einen Mittelkammer (31) und damit unter Veränderung der gesamten wirksamen Länge des Luftmessers lageveränderlich.

2. Vorrichtung nach Anspruch 1, **dadurch gekennzeichnet,** daß die Einrichtungen zur Randanblasung in dem Luftmesser (15) mit ihrer jeweiligen Luftaustrittsöffnung (27, 27') so angeordnet ist, daß die Luftaustrittsöffnung (27) des Luftmessers (15) und die Luftaustrittsöffnungen (27') der Einrichtung zur Randanblasung auf einer gemeinsamen Druck-Anlege-Wirklinie liegen.

3. Vorrichtung nach Anspruch 1 oder 2, **dadurch gekennzeichnet,** daß bei einer Längenveränderung des Luftmessers (15) die zumindest beiden Außenkammern (33) lediglich lageveränderlich sind und dabei die Größe der Luftaustrittsöffnung (27') der für die Randanblasung vorgesehenen Außenkammern (33) unverändert bleibt.

4. Vorrichtung nach einem der Ansprüche 1 bis 3, **dadurch gekennzeichnet,** daß das Luftmesser (15) zumindest zwei Luftmesser-Elemente (15a, 15b) umfaßt, die im Querschnitt quer zur Luftdurchströmrichtung im wesentlichen L-förmig gestaltet und um 180° verdreht zueinander so angeordnet sind, daß kanalförmige und von der Luft durchströmte Luftdurchtrittskammern (31, 33) gebildet sind, deren Mittelkammer (31) durch Relativverschiebung der beiden Luftmesser-Elemente (15a, 15b) in ihrer wirksamen Länge veränderbar ist.

5. Vorrichtung nach Anspruch 4, **dadurch gekennzeichnet,** daß die Außenkammern (33) in Längsrichtung des Luftmessers (15) längeveränderlich sind, wozu die nach außen weisende Begrenzungswand der Außenkammern (33) jeweils an dem einen Luftmesser-Element (15a bzw. 15b) und die die Außenkammern (33) zur Mittelkammer (31) begrenzenden Stege (29) am jeweils gegenüberliegenden Luftmesser-Element (15b bzw. 15a) sitzen.

6. Vorrichtung nach einem der Ansprüche 1 bis 5, **dadurch gekennzeichnet,** daß die Außenkammern (33) zur Randanblasung über eine Wand oder einen Steg (29) von der Mittelkammer (31) getrennt sind.

7. Vorrichtung nach einem der Ansprüche 1 bis 6, **dadurch gekennzeichnet,** daß den Außenkammern (33) über einen separaten Hochdruck-Zuführkanal (43) separat Hochdruck- oder Preßluft zuführbar ist, die unter einem höheren Druck steht, als eine der Mittelkammer (31) zuführbare Ventilatorluft (35) .

8. Vorrichtung nach einem der Ansprüche 1 bis 7, **dadurch gekennzeichnet**, daß die die Außenkammern (33) von der Mittelkammer (31) trennenden Wände oder Stege (29) so geformt sind, daß bis zur Luftaustrittsöffnung (27, 27') eine vollständige Trennung der Außenkammern (33) zur Mittelkammer (31) besteht.

9. Vorrichtung nach einem der Ansprüche 1 bis 7, **dadurch gekennzeichnet,** daß die die Außenkammern (33) von der Mittelkammer (31) trennenden Wände oder Stege (29) so geformt sind, daß eine teilweise Trennung zwischen den Außenkammern (33) und der Mittelkammer (31) derart besteht, daß die die Kammern (31, 33) voneinander trennenden Wände oder Stege (29) zur Ermöglichung einer Luftdurchmischung der in die Mittelkammer (31) einleitbaren Ventilatorluft (35) mit der in die Außenkammern einleitbaren Hochdruckluft vor der Luftaustrittsöffnung (27, 27') enden.

10. Vorrichtung nach einem der Ansprüche 1 bis 9, **dadurch gekennzeichnet,** daß die Außenkammern (33) und/oder deren Begrenzungswände und/oder die eine Trennung zur Mittelkammer (31) bewirkenden Wände oder Stege (29) so geneigt ausgerichtet sind, daß die über die Außenkammern (33) in Richtung Folienbahn (1) austretende Hochdruckluft mit einer schräg auf den Kunststoffolien-Rand gerichteten Strömkomponente, vorzugsweise in einem Winkel von 0° bis 45°, austreten kann.

11. Vorrichtung nach Anspruch 10, **dadurch gekennzeichnet,** daß die Außenkammern (33) so geformt sind, daß die Hochdruckluft mit einer zum Folienrand gerichteten Strömungskomponente mit einem Winkel von 15° bis 20° ausströmen kann.

12. Vorrichtung nach einem der Ansprüche 1 bis 11, **dadurch gekennzeichnet,** daß die eine Trennung zwischen den Außenkammern (33) und der Mittelkammer (31) bewirkenden Stege (29) in Durchströmrichtung zumindest in einer Teilhöhe mit einer zunehmend geringeren Stegwanddicke (29) ausgebildet sind.

13. Vorrichtung nach einem der Ansprüche 1 bis 12, **dadurch gekennzeichnet,** daß die Außenkammern (33) einschließlich ihrer Wände oder Stege (29) zur Abtrennung von der Mittelkammer (31) aus auswechselbaren Einsätzen bestehen.

14. Vorrichtung nach einem der Ansprüche 1 bis 13, **dadurch gekennzeichnet,** daß die die Außenkammern (33) von der Mittelkammer (31) trennenden Stege (29) jeweils an dem die Außenkammern (33) bildenden Luftmesser-Element (15a bzw. 15b) angeordnet sind.

## Claims

1. Apparatus for laying a plastic film on a roll (7), in particular for laying a polymer melt film on a chill roll (7), having an air knife (15), which extends with its longitudinal direction transversely across the film web (1) and hence in the effective width of the film web (1) taken off in the take-off direction, and which is provided with one or more air exit openings (27) to apply pressure to the plastic film (1) by means of air, which emerges with a flow component directed transverse to the film web, and having a separately operable device to blow on the edge of the plastic film with elevated air pressure and/or elevated air velocity, the device for blowing on the edge being integrated into the air knife (15), characterized by the following features
- the air knife (15) with its device for blowing on the edge is adjustable to a different effective width in the longitudinal direction of the air knife and hence transversely to the take-off direction of the film web (1),
- the air knife (15) comprises at least three chambers, namely at least one central chamber (31) for blowing on the middle of the plastic film and at least two opposed outer chambers (33) for blowing on the edges of the plastic film,
- the position of the at least two outer chambers (33), which are separated from the at least one central chamber (31), can be varied in the longitudinal direction of the air knife, simultaneously varying the length of the at least one central chamber (31) and therefore varying the overall effective length of the air knife.

2. Apparatus according to Claim 1, characterized in that the devices for blowing on the edge is [sic] arranged in the air knife (15) with their respective air exit opening (27, 27') such that the air exit opening (27) of the air knife (15) and the air exit openings (27') of the device for blowing on the edge lie on a joint effective pressure effect line.

3. Apparatus according to Claim 1 or 2, characterized in that when the length of the air knife (15) is varied, only the position of the at least two outer chambers (33) can be varied and, at the same time, the size of the air exit opening (27') of the outer chambers (33) provided for blowing on the edge remains unchanged.

4. Apparatus according to one of Claims 1 to 3, characterized in that the air knife (15) comprises at least two air-knife elements (15a, 15b), which are essentially shaped like an L in cross section transverse to the air flow direction and are arranged rotated through 180° to each other such that air passage chambers (31, 33) are formed, which are in the form of ducts and have air passing through, and whose central chamber (31) can be changed in its effective length by means of relative displacement of the two air-knife elements (15a, 15b).

5. Apparatus according to Claim 4, characterized in that the outer chambers (33) are of variable length in the longitudinal direction of the air knife (15), to which end the outwardly pointing boundary wall of the outer chambers (33) is in each case seated on the one air-knife element (15a or 15b), and the webs (29) delimiting the outer chambers (33) from the central chamber (31) are seated on the respective opposite air-knife element (15b or 15a).

6. Apparatus according to one of Claims 1 to 5, characterized in that the outer chambers (33) for blowing on the edges are separated from the central chamber (31) by a wall or a web (29).

7. Apparatus according to one of Claims 1 to 6, characterized in that high-pressure air or compressed air can be fed to the outer chambers (33) via a separate high-pressure feed duct (43), this air being at a higher pressure than blower air (35) that can be fed to the central chamber (31).

8. Apparatus according to one of Claims 1 to 7, characterized in that the walls or webs (29) separating the outer chambers (33) from the central chamber (31) are shaped in such a way that there is complete separation of the outer chambers (33) from the central chamber (31) as far as the air exit opening (27, 27').

9. Apparatus according to one of Claims 1 to 7, characterized in that the walls or webs (29) separating the outer chambers (33) from the central chamber (31) are shaped in such a way that there is partial separation between the outer chambers (33) and the central chamber (31), such that the walls or webs (29) separating the chambers (31, 33) from one another end before the air exit opening (27, 27'), in order to permit air mixing of the blowing air (35) which can be introduced into the central chamber (31) and the high-pressure air which can be introduced into the outer chambers.

10. Apparatus according to one of Claims 1 to 9, characterized in that the outer chambers (33) and/or their boundary walls and/or the walls or webs (29) effecting a separation from the central chamber (31) are aligned at an angle such that the high-pressure air emerging via the outer chambers (33) in the direction of the film web (1) can emerge with a flow component directed obliquely onto the plastic film edge, preferably at an angle of 0° to 45°.

11. Apparatus according to Claim 10, characterized in that the outer chambers (33) are shaped in such a way that the high-pressure air can flow out with a flow component that is directed towards the film edge at an angle of 15° to 20°.

12. Apparatus according to one of Claims 1 to 11, characterized in that the webs (29) effecting a separation between the outer chambers (33) and the central chamber (31) are constructed, at least over part of their height, with an increasingly lower web wall thickness (29) in the direction of flow.

13. Apparatus according to one of Claims 1 to 12, characterized in that the outer chambers (33), including their walls or webs (29) for separating off the central chamber (31), comprise replaceable inserts.

14. Apparatus according to one of Claims 1 to 13, characterized in that the webs (29) separating the outer chambers (33) from the central chamber (31) are each arranged on the air-knife element (15a or 15b) forming the outer chambers (33).

## Revendications

1. Dispositif pour l'application d'un film de matière synthétique contre un cylindre (7), en particulier pour l'application d'un film de matière synthétique fondue contre un cylindre de refroidissement (7), lequel dispositif comporte une lame d'air (15) qui s'étend dans le sens de sa longueur transversalement par rapport à la nappe (1) de la feuille et donc suivant la largeur de la nappe (1) de la feuille étirée dans la direction d'étirage, et qui est dotée d'une ou de plusieurs ouvertures de sortie d'air (27) pour exercer une poussée sur le film de matière synthétique (1) au moyen d'air qui sort avec des composantes d'écoulement orientées transversalement par rapport à la nappe de la feuille, et comportant un dispositif apte à être actionné séparément pour le soufflage des bords du film de matière synthétique par de l'air sous pression plus élevée et/ou de l'air à vitesse plus élevée, le dispositif de soufflage des bords étant intégré dans la lame d'air (15),
caractérisé en ce que la lame d'air (15) avec son dispositif de soufflage des bords peut être ajustée à différentes largeurs d'action dans le sens de la longueur de la lame d'air et donc transversalement à la direction d'étirage de la nappe (1) de la feuille,
- en ce que la lame d'air (15) comporte au moins trois chambres, à savoir au moins une chambre centrale (31) pour le soufflage central de la feuille de matière synthétique et au moins deux chambres extérieures (33) opposées pour le soufflage des bords de la feuille de matière synthétique,
- et en ce que la position des deux chambres extérieures (33) au moins présentes séparées par la chambre centrale (31) au moins présente peut être modifiée dans le sens de la longueur de la lame d'air avec modification simultanée de la longueur de la chambre centrale (31 ) au moins présente, et donc avec modification de la longueur totale d'action de la lame d'air.

2. Dispositif selon la revendication 1, caractérisé en ce que chacune des ouvertures de sortie d'air (27, 27') des dispositifs de soufflage des bords sont disposées dans la lame d'air (15) de telle sorte que l'ouverture de sortie d'air (27) de la lame d'air (15) et les ouvertures de sortie d'air (27') du dispositif de soufflage des bords sont situées sur une ligne commune d'action d'application de la pression.

3. Dispositif selon la revendication 1 ou 2, caractérisé en ce que lors d'une modification de la longueur de la lame d'air (15), seule la position des deux chambres extérieures (33) au moins présentes peut être modifiée, et à cette occasion, la grandeur de l'ouverture de sortie d'air (27') des chambres extérieures (33) prévues pour le soufflage des bords reste inchangée.

4. Dispositif selon l'une des revendications 1 à 3, caractérisé en ce que la lame d'air (15) comporte au moins deux éléments de lame d'air (15a, 15b) qui, en coupe transversale, sont configurés essentiellement en forme de L dans la direction transversale à la direction d'écoulement de l'air et forment un angle de 180° l'un par rapport à l'autre, de telle sorte que des chambres de sortie d'air (31, 33) en forme de canal et traversées par l'air sont formées, la longueur active de la chambre centrale (31) pouvant être modifiée par un déplacement relatif des deux éléments de lame d'air (15a, 15b).

5. Dispositif selon la revendication 4, caractérisé en ce que la longueur des chambres extérieures (33) peut être modifiée dans le sens de la longueur de la lame d'air (15), et à cet effet, la paroi frontière tournée vers l'extérieur de chaque chambre extérieure (33) est située contre l'un des éléments de lame d'air (15a ou 15b) et les ailes (29) délimitant les chambres extérieures (33) par rapport à la chambre centrale (31) sont situées contre l'élément de lame d'air (15b ou 15a) opposé.

6. Dispositif selon l'une des revendications 1 à 5, caractérisé en ce que les chambres extérieures (33) de soufflage des bords sont séparées de la chambre centrale (31) par une paroi ou une aile (29).

7. Dispositif selon l'une des revendications 1 à 6, caractérisé en ce que de l'air sous haute pression ou de l'air comprimé à une pression plus élevée que celle d'air de ventilateur (35) amené à la chambre centrale (31), peut être amené aux chambres extérieures (33) par un canal séparé (43) d'amenée sous haute pression.

8. Dispositif selon l'une des revendications 1 à 7, caractérisé en ce que les parois ou ailes (29) séparant les chambres extérieures (33) de la chambre centrale (31) sont configurées de telle sorte qu'il y ait une séparation complète entre les chambres extérieures (33) et la chambre centrale (31) jusqu'à l'ouverture de sortie d'air (27, 27').

9. Dispositif selon l'une des revendications 1 à 7, caractérisé en ce que les parois ou ailes (29) séparant les chambres extérieures (33) de la chambre centrale (31) sont configurées de manière à obtenir une séparation partielle entre les chambres extérieures (33) et la chambre centrale (31), de telle sorte que les parois ou ailes (29) séparant les unes des autres les chambres (31, 33) se terminent en amont de l'ouverture de sortie d'air (27, 27') pour permettre un mélange de l'air de ventilateur (35) amené dans la chambre centrale (31) avec l'air sous haute pression introduit dans les chambres extérieures.

10. Dispositif selon l'une des revendications 1 à 9, caractérisé en ce que les chambres extérieures (33) et/ou les parois qui les délimitent et/ou les parois ou ailes (29) réalisant leur séparation par rapport à la chambre centrale (31) sont orientées obliquement de telle sorte que l'air sous haute pression sortant en direction de la nappe (1) de la feuille par les chambres extérieures (33) peut sortir avec une composante d'écoulement orientée obliquement vers le bord de la feuille de matière synthétique, de préférence sous un angle de 0° à 45°.

11. Dispositif selon la revendication 10, caractérisé en ce que les chambres extérieures (33) sont configurées de telle sorte que l'air sous haute pression peut en sortir avec une composante d'écoulement orientée vers le bord de la feuille sous un angle de 15° à 20°.

12. Dispositif selon l'une des revendications 1 à 11, caractérisé en ce que les ailes (29) réalisant une séparation entre les chambres extérieures (33) et la chambre centrale (31) sont configurées au moins sur une partie de leur hauteur avec une épaisseur de paroi d'aile (29) de plus en plus faible dans la direction de l'écoulement.

13. Dispositif selon l'une des revendications 1 à 12, caractérisé en ce que les chambres extérieures (33), y compris leurs parois ou ailes (29) pour la séparation par rapport à la chambre centrale (31), sont constituées de garnitures remplaçables.

14. Dispositif selon l'une des revendications 1 à 13, caractérisé en ce que les ailes (29) séparant les chambres extérieures (33) de la chambre centrale (31) sont chacune disposées contre l'élément de lame d'air (15a ou 15b) formant les chambres extérieures (33).
